# EUROPEAN PATENT APPLICATION

(11) **EP 2 982 965 A1**
(43) Date of publication of application: **10.02.2016**
(21) Application number: 15175635.0
(22) Date of filing: 07.07.2015
(51) Int. Cl.: G01N 21/3504, G01N 21/25, G01N 21/39

(54) **OPTICAL SYSTEM FOR GENERATING BEAM OF REFERENCE LIGHT AND METHOD FOR SPLITTING BEAM OF LIGHT TO GENERATE BEAM OF REFERENCE LIGHT**

(30) Priority: 31.07.2014 JP 2014156413
(71) Applicant: Yokogawa Electric Corporation, Tokyo 180-8750 (JP)
(72) Inventor: Maeda, Minoru, Tokyo, 180-8750 (JP); Mitsumoto, Yasuhiko, Tokyo, 180-8750 (JP)
(74) Representative: Henkel, Breuer & Partner

(57) **Abstract**

An optical system for generating at least one beam of reference light according to one aspect of the present invention includes an optical emitter configured to emit a first beam of light, and a beam splitter configured to split the first beam into a second beam of measuring light for irradiating a target to be measured and at least one third beam of reference light. The beam splitter is disposed to make an incident angle of the first beam into the beam splitter be less than 10 degrees.

## Description

### BACKGROUND OF THE INVENTION

### Field of the Invention

The present invention relates to an optical system for generating at least one beam of reference light and a method for splitting a beam of light to generate at least one beam of reference light. The optical system for generating the at least one beam of reference light is included in an apparatus for irradiating a target to be measured with measuring light emitted from an optical source and for detecting transmitted light through the target and reflected light from the target.

Priority is claimed on Japanese Patent Application No. 2014-156413, filed on July 31, 2014, the contents of which are incorporated herein by reference.

### Description of Related Art

Measuring apparatuses such as laser spectroscopy gas analyzers include an optical system for irradiating a target to be measured with measuring light emitted from an optical source and for detecting transmitted light through the target and reflected light from the target. There are some cases where such an optical system included in the measuring apparatus splits a beam of light for irradiating the target and uses one of the split beams as reference light. The reference light is used for different purposes such as measurement of the amount of light of the optical source and wavelength calibration.

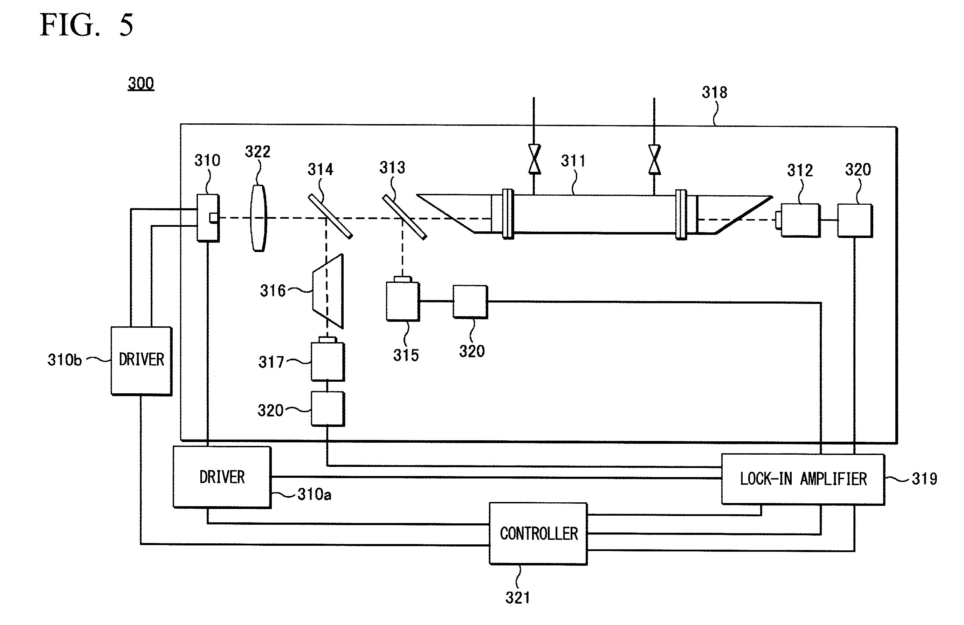

Japanese Patent Application Laid-Open Publication No. 2001-21493 discloses a laser spectroscopy gas analyzer including an optical system for generating beams of reference light in the related art. FIG. 5 is a block diagram schematically showing the general configuration of a laser spectroscopy gas analyzer including an optical system for generating beams of reference light in the related art. A laser spectroscopy gas analyzer 300 shown in FIG. 5 includes an optical system including a wavelength-variable semiconductor laser optical source 310 for generating a beam of measuring laser light, a lens 322 for converting the measuring laser light into a parallel laser light, a sample cell 311 into which sample gas is introduced, a first optical detector 312 for measuring the optical intensity of the laser light passed through the sample cell 311, first and second beam splitters 313 and 314, each of which splits the laser light emitted from the laser optical source 310 to generate beams of reference light, which is a part of the laser light, a second optical detector 315 for measuring the optical intensity of the laser light generated by splitting (reflecting) the laser light emitted from the laser optical source 310 using the first beam splitter 313, a reference cell 316 in which a target to be measured is enclosed in the reduced pressure condition, and a third optical detector 317 for measuring the optical intensity of the laser light generated by splitting the laser light emitted from the laser optical source 310 using the second beam splitter 314 and passed through the reference cell 316.

The optical system is generally enclosed in a purge box 318. The laser optical source 310 is equipped with drivers 310a and 310b, each of which is for controlling a driving current or a driving temperature. Each of the optical detectors 312, 315, and 317 is equipped with a pre-amplifier 320 for converting the detected amount of light into a voltage signal, amplifying the voltage signal, and inputting the amplified voltage signal into a lock-in amplifier 319.

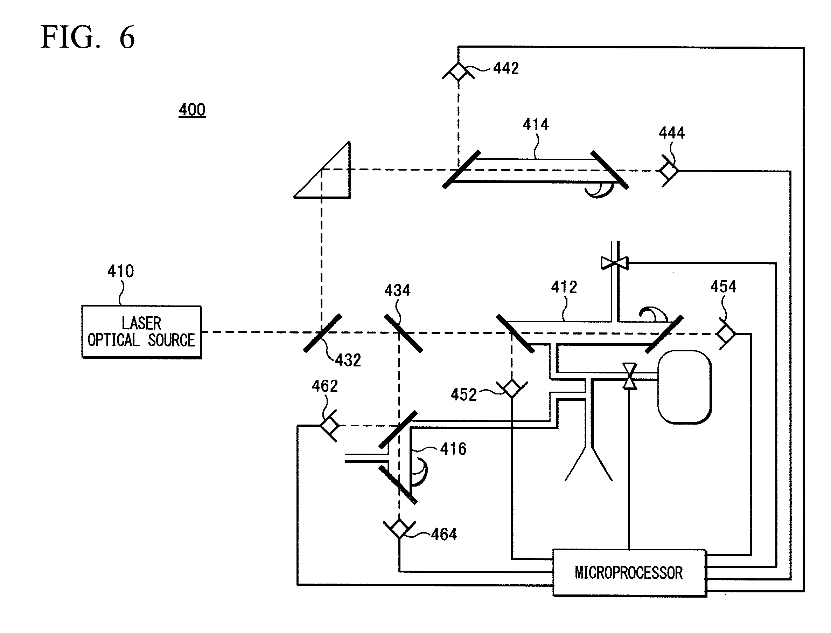

Japanese Patent Application Laid-Open Publication No. 2005-69882 discloses an optical measuring system, which includes another measuring apparatus including an optical system for generating beams of reference light in the related art. FIG. 6 is a block diagram schematically showing an optical measuring system, which is another measuring apparatus including an optical system for generating beams of reference light in the related art. An optical measuring system 400 shown in FIG. 6 includes a wavelength-variable laser optical source 410, a reference cell 414, a sample cell 412, and a dilution cell 416. The reference cell 414 is equipped with a pair of optical detectors 442 and 444, which are positioned at the input and the output of the reference cell 414, respectively. The sample cell 412 is equipped with a pair of optical detectors 452 and 454, which are positioned at the input and the output of the sample cell 412, respectively. The dilution cell 416 is equipped with a pair of optical detectors 462 and 464, which are positioned at the input and the output of the dilution cell 416, respectively.

The beam emitted from the laser optical source 410 and irradiated to the sample cell 412 is split by the beam splitters 432 and 434. A first beam generated by splitting the beam using the beam splitter 432 is input into the reference cell 414 as first reference light. A second beam generated by splitting the beam using the beam splitter 434 is input into the dilution cell 416 as second reference light. In FIG. 6, reflected light from an input board of each of the gas cells 412, 414, and 416 is also used as reference light.

As shown in FIGS. 5 and 6, in the case that light output from an optical source is split to generate a beam of light used as reference light, beam splitters are used. Optical glass substrates are widely used as the beam splitters. In order to split a beam of light and to advance the split beam in a direction nearly perpendicular to the incident direction, the optical glass substrate is disposed so that the incident angle of the light is approximately 45 degrees.

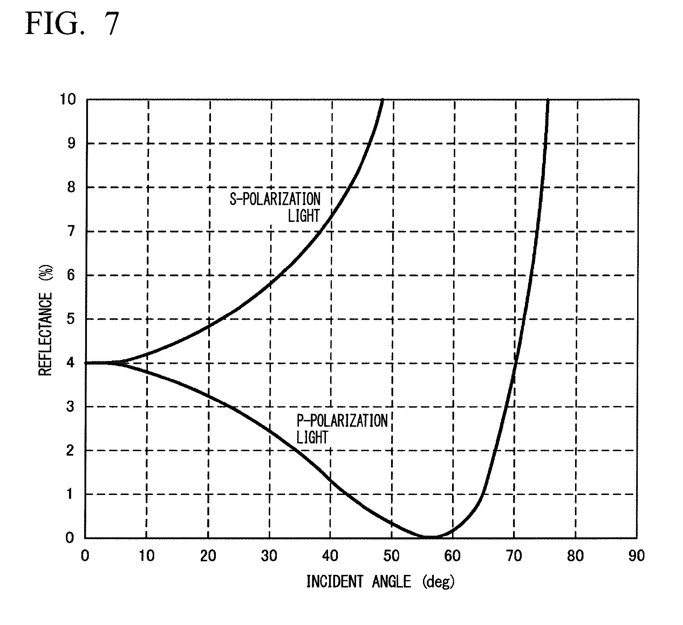

It has been known that, when the light is incident into the optical glass substrate, the reflectance is changed depending on the incident angle and the polarization direction as shown in FIG. 7. FIG. 7 is a diagram showing reflectance characteristics depending on incident angles in a general optical glass substrate without an anti-reflection coating. A p-polarized light is a light wave which vibrates in a plane including a normal line of a glass face and incident light, and an s-polarized light is a light wave which vibrates in a direction perpendicular to the vibration direction of the p-polarized light. Other polarization state may be defined by changing the ratio of the p-polarized light and the s-polarized light and synthesizing them.

The reflectance of each of the p-polarized light and the s-polarized light is determined depending on the incident angle and the refraction index of the glass. Since the reflectance of the p-polarized light and that of the s-polarized light depend on different laws, the reflectance of the p-polarized light and that of the s-polarized light are different from each other depending on the incident angles as shown in FIG. 7. In particular, the reflectance of the p-polarized light and that of the s-polarized light are greatly different from each other at the incident angle of approximately 45 degrees which is used for the beam splitter in the related art. The incident angle where the reflectance of the p-polarized light is equal to 0% is referred to as Brewster's angle.

When the polarization state of light output from the optical source is changed as long as the reflectance of the p-polarized light and that of the s-polarized light are different from each other, the ratio of the p-polarized light and the s-polarized light is changed, thereby, the intensity of the reflected light is changed. Thereby, the ratio of the measuring light and the reference light, which have been generated by splitting the beam of light output from the optical source, is changed. This influences the measured results.

Therefore, in the measuring apparatus including the optical system for generating beams of reference light in the related art, spatial light is emitted from the laser optical source without using waveguides such as optical fibers, the spatial light is converted into parallel light, and the parallel light is guided to the beam splitter. Thereby, the polarization state of the light to be incident into the beam splitter remains constant, and the ratio of the measuring light and the reference light, which are generated by splitting the beam of light output from the optical source, remains constant.

On the other hand, if the output light from the laser optical source is guided to the beam splitter via the optical fiber, this increases the degree of freedom of the position of the laser optical source and facilitates the maintenance. In particular, in the case of an explosion-proof measuring apparatus, this enables the laser optical source to be disposed at a safe location which is distant from measuring cells and the like disposed at a dangerous location. Therefore, the operational convenience is improved.

However, if the light is transmitted through the optical fiber, the polarization state of the transmitted light is changed depending on various external factors. Therefore, if the output light from the optical fiber is incident into the optical system for generating beams of reference light in the related art, the intensity of the reflected light is not stabilized and the ratio of the measuring light and the reference light, which are generated by splitting the beam of light output from the optical source, is changed. This influences the measured results.

A non-polarization beam splitter, which has no changes in the ratio of the measuring light and the reference light, is put into practical use, but the non-polarization beam splitter is applicable to only a specific wavelength. Therefore, if the non-polarization beam splitter is used in an optical system of a measuring apparatus, which sweeps the wavelength of light, the sufficient effect is not obtained.

### SUMMARY OF THE INVENTION

One aspect of the present invention provides an optical system for generating at least one beam of reference light, which does not greatly influence a ratio of measuring light and reference light generated by splitting a beam of incident light even if the polarization state of the incident light is changed, and a method for splitting a beam of light to generate at least one beam of reference light.

An optical system for generating at least one beam of reference light according to one aspect of the present invention may include an optical emitter configured to emit a first beam of light, and a beam splitter configured to split the first beam into a second beam of measuring light for irradiating a target to be measured and at least one third beam of reference light. The beam splitter may be disposed to make an incident angle of the first beam into the beam splitter be less than 10 degrees.

In the above-stated optical system, the beam splitter may be disposed to make the incident angle of the first beam into the beam splitter be equal to or greater than 3 degrees and be equal to or less than 5 degrees.

In the above-stated optical system, the optical emitter may be an output end of an optical fiber.

In the above-stated optical system, the beam splitter may be a wedge substrate beam splitter.

In the above-stated optical system, the beam splitter may be configured to function as a window of a cell encapsulating the target.

The above-stated optical system may further include a lens disposed on a first optical axis of the first beam and configured to convert the first beam into a parallel beam, and a first cell disposed on a second optical axis of the second beam. The target may flow through the first cell. The beam splitter may be disposed to make an incident angle of the parallel beam into the beam splitter be less than 10 degrees.

In the above-stated optical system, the at least one third beam may include a first reference beam and a second reference beam. The optical system may further include a first optical detector disposed on a third optical axis of the second beam transmitted through the first cell and configured to detect a first intensity of the second beam transmitted through the first cell, a second optical detector disposed on a fourth optical axis of the first reference beam and configured to detect a second intensity of the first reference beam, a second cell for wavelength-calibration disposed on an fifth optical axis of the second reference beam, and a third optical detector disposed on a fifth optical axis of the second reference beam transmitted through the second cell and configured to detect a third intensity of the second reference beam transmitted through the second cell.

In the above-stated optical system, the first cell may include an input optical window configured to function as the beam splitter.

The above-stated optical system may further include a first optical detector disposed on a third optical axis of the second beam transmitted through the first cell and configured to detect a first intensity of the second beam transmitted through the first cell, and a second cell for wavelength-calibration disposed between the lens and the first cell and including an input optical window and an output optical window. Each of the input optical window and the output optical window may be configured to function as the beam splitter. The at least one third beam may include a first reference beam reflected by the input optical window and a second reference beam reflected by the output optical window. The above-stated optical system may further include a second optical detector disposed on a fourth optical axis of the first reference beam and configured to detect a second intensity of the first reference beam and a third optical detector disposed on a fifth optical axis of the second reference beam and configured to detect a third intensity of the second reference beam.

A method for splitting a beam of light to generate at least one beam of reference light according to one aspect of the present invention may include inputting a first beam of light into a beam splitter and splitting the first beam into a second beam of measuring light for irradiating a target to be measured and at least one third beam of reference light. The incident angle of the first beam into the beam splitter being may be less than 10 degrees.

In the above-stated method, the incident angle of the first beam into the beam splitter may be equal to or greater than 3 degrees and be equal to or less than 5 degrees.

In the above-stated method, inputting the first beam into the beam splitter may include inputting the first beam into the beam splitter via an optical fiber.

In the above-stated method, the beam splitter may be a wedge substrate beam splitter.

In the above-stated method, the beam splitter may be configured to function as a window of a cell encapsulating the target.

### BRIEF DESCRIPTION OF THE DRAWINGS

FIG. 1 is a block diagram schematically showing an optical system for generating at least one beam of reference light according to a first embodiment.
FIG. 2 is a block diagram schematically showing a configuration where output light from a laser optical source is input via an optical fiber according to the first embodiment.
FIG. 3 is a block diagram schematically showing a configuration where an input optical window of a flow cell of measurement target gas is used as a beam splitter according to a second embodiment.
FIG. 4 is a block diagram schematically showing a configuration where a wedge window of a wavelength-calibration gas cell is used as a beam splitter according to a third embodiment.
FIG. 5 is a block diagram schematically showing a general configuration of a laser spectroscopy gas analyzer including an optical system for generating beams of reference light in the related art.
FIG. 6 is a block diagram schematically showing an optical measuring system, which is another measuring apparatus including an optical system for generating beams of reference light in the related art.
FIG. 7 is a diagram showing a correlation between incident angles and reflectance of a p-polarization light and an s-polarization light.

### DETAILED DESCRIPTION OF THE INVENTION

Hereinafter, several embodiments of the present invention will be described with reference to the drawings.

### <First Embodiment>

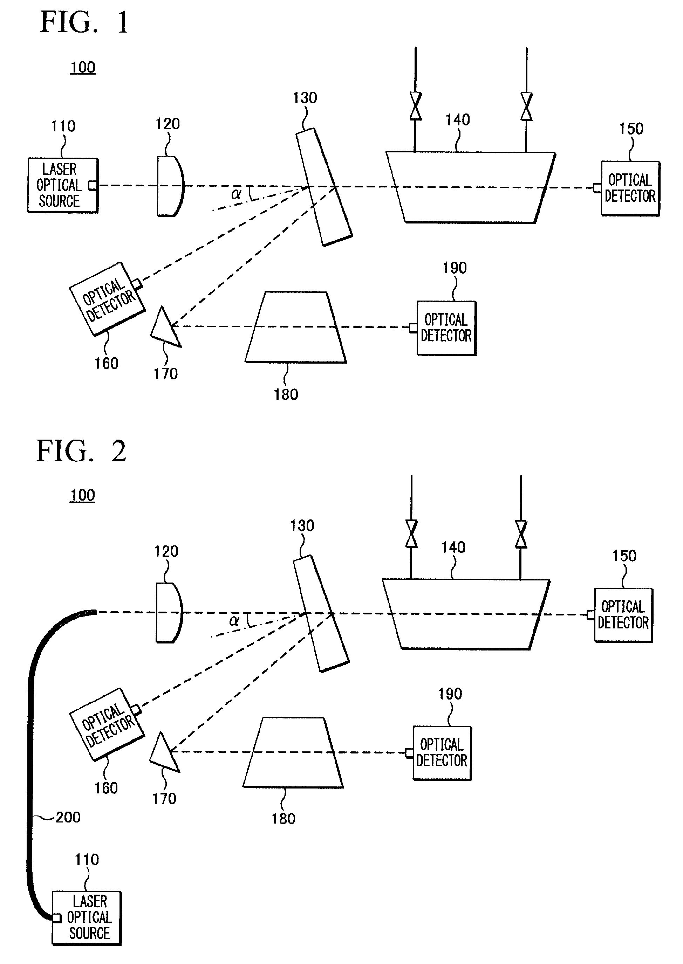

FIG. 1 is a block diagram schematically showing an optical system for generating at least one beam of reference light according to the first embodiment. In the first embodiment, a description will be provided for the case where an optical system for generating at least one beam of reference light is applied to a laser spectroscopy gas analyzer.

As shown in FIG. 1, an optical system 100 for generating at least one beam of reference light applied to a laser spectroscopy gas analyzer includes a laser optical source 110, a lens 120 for parallel light, a wedge substrate beam splitter 130, a flow cell 140 for measurement target gas, an optical detector 150 for measuring light, an optical detector 160 for reference light, a mirror 170, a gas cell 180 for wavelength-calibration and an optical detector 190 for wavelength-calibration.

The laser optical source 110 is a wavelength-variable laser optical source which functions as an optical emitter. The laser optical source 110 emits light based on an output signal from an optical output controller not illustrated and sweeps the wavelength of light based on an output signal from a wavelength-variable controller not illustrated.

The lens 120 for parallel light is disposed on the output optical axis of the laser optical source 110. The lens 120 for parallel light converts the beam of light output from the laser optical source 110 into a parallel beam and inputs the parallel beam into the wedge substrate beam splitter 130.

In the first embodiment, the wedge substrate beam splitter 130 is disposed so that the incident angle α of the incident light from the laser optical source 110 is less than 10 degrees. In the first embodiment, the wedge face is the incident face of the wedge substrate beam splitter 130, but the wedge face may be a face opposite to the incident face.

The flow cell 140 for measurement target gas is disposed on the optical axis of the beam, which has been transmitted through the wedge substrate beam splitter 130. In addition, the optical detector 150 for measuring light is disposed on the optical axis of the beam, which has been transmitted through the flow cell 140 for measurement target gas.

The flow cell 140 for measurement target gas includes input and output optical windows, through which the beam is transmitted, and gas inlets, through which the measurement target gas is transmitted. The measurement target gas flows through the flow cell 140 for measurement target gas and the beam is transmitted through the flow cell 140 for measurement target gas. When the beam is transmitted through the measurement target gas, the light having a specific wavelength is absorbed. The specific wavelength is determined according to the measurement target gas.

The optical detector 160 for measuring the intensity of reference light is disposed on the optical axis of the reflected light from the wedge face (front face) of the wedge substrate beam splitter 130. The gas cell 180 for wavelength-calibration and the optical detector 190 for wavelength-calibration are disposed on the optical axis of the reflected light from the back face opposite to the front face. Gas, which has an absorption line within the wavelength band to be measured, is encapsulated in the gas cell 180 for wavelength-calibration. If the angular difference between the first direction of the front-reflected light and the second direction of the back-reflected light is small, the mirror 170 is disposed on the optical axis of one of the front-reflected light and the back-reflected light so as to maintain the separation distance between the front-reflected light and the back-reflected light as shown in FIG. 1.

In order to prevent first optical interference between the front-reflected light and the back-reflected light of the wedge substrate beam splitter 130 and second optical interference between a first transmitted light, which has been reflected two times, in other words, reflected by the back face and the front face of the wedge substrate, and a second transmitted light, which has been directly transmitted through the flow cell 140 without being reflected, the wedge substrate beam splitter 130 is used in the optical system 100. Other types of beam splitters may be used. The front-reflected light and the back-reflected light are obtained using the wedge substrate beam splitter 130. Since the use of the wedge substrate beam splitter 130 eliminates the need for the use of two beam splitters, the reduction of the number of components included in the optical system 100 and the miniaturization of the optical system 100 can be realized.

Each of the optical detectors 150, 160, and 190 inputs a light receiving signal in accordance with the optical intensity of the received beam into a light receiving circuit not illustrated. In order to prevent the optical interference caused by multiple reflections, a configuration having no window glasses may be used. A collecting lens may be disposed in the fore stage of each of the optical detectors 150, 160, and 190. The output of each light receiving circuit is detected by a data processor not illustrated and is applied to a calculation. Thereby, the concentration of the measurement target gas is calculated.

As described above, in the first embodiment, the wedge substrate beam splitter 130 is disposed so that the incident angle α of the light emitted from the optical emitter is less than 10 degrees. As shown in the correlation diagram between incident angles and reflectance of FIG. 7, the difference between the reflectance of the s-polarization light and that of the p-polarization light is small as long as the incident angle of each of the s-polarization light and the p-polarization light is less than 10 degrees. Therefore, even if the polarization state of the incident light is changed, this does not greatly influence the ratio of the measuring light and the reference light generated by splitting the beam of incident light.

If the incident angle is equal to or less than 5 degrees, the reflectance of the s-polarization light and that of the p-polarization light are almost the same as each other. In this case, the influence of the change in the polarization state on the ratio of the measuring light and the reference light is further reduced. On the other hand, if the incident angle is too small, the reflected light and the incident light become too close to each other. Since this makes the securing of space for detecting the reflected light difficult, the incident angle may be equal to or greater than 3 degrees and equal to or less than 5 degrees.

As described above, in the optical system for generating the at least one beam of reference light according to the first embodiment, since the change in the polarization state of the incident light does not greatly influence the ratio of the measuring light and the reference light generated by splitting the beam of incident light, the output light from the laser optical source 110 can be input via the optical fiber 200 as shown in FIG. 2. In this case, the output end of the optical fiber 200 acts as an optical emitter.

Thereby, the degree of freedom of the position of the laser optical source 110 is increased and the laser optical source 110 can be separated from the measurement block such as flow cell 140 for the measurement target gas and optical detector 150. This facilitates the maintenance such as exchange of the optical source and facilitates the design of explosion-proof devices. Therefore, the operational convenience is improved.

### <Second embodiment>

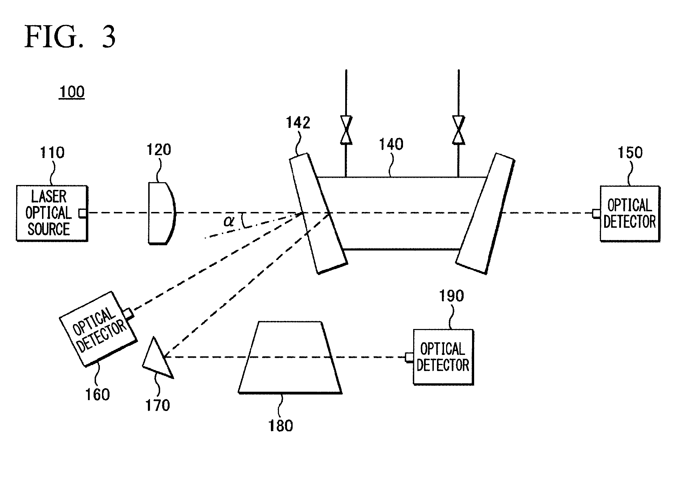

In the above-stated first embodiment, the wedge substrate beam splitter 130 splits the beam of incident light to generate the at least one beam of reference light. As shown in FIG. 3, an input optical window 142 of the flow cell 140 for the measurement target gas may be used as a beam splitter. Since, generally, the input optical window 142 is a wedge window for preventing optical interference, front-reflected light, back-reflected light, and the like can be obtained in a similar way to the above-stated first embodiment. The front-reflected light may be used for the measurement of the intensity of reference light and the back-reflected light may be used for the wavelength-calibration.

Also in the second embodiment, the input optical window 142 used as a beam splitter is disposed so that the incident angle α of the incident light with respect to the input optical window 142 is less than 10 degrees. The input optical window 142 may be disposed so that the incident angle α is equal to or greater than 3 degrees and equal to or less than 5 degrees. In the second embodiment, since the separated wedge substrate beam splitter 130 is not used, the number of components included in the optical system 100 can be reduced.

### <Third embodiment>

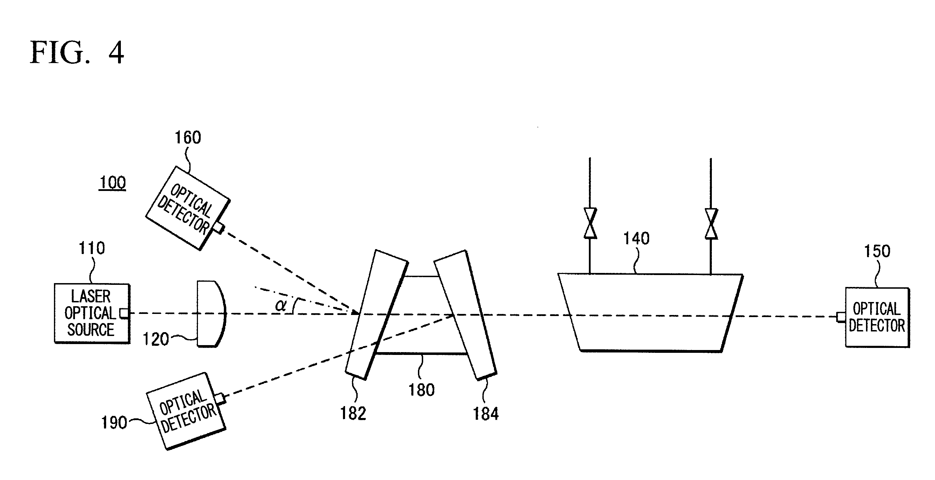

As shown in FIG. 4, the gas cell 180 for wavelength-calibration may be equipped with an input optical window 182 and an output optical window 184, each of which is used as a beam splitter. In this case, the flow cell 140 for the measurement target gas and the optical detector 150 for measuring light are disposed on the optical axis in the latter stage of the gas cell 180 for wavelength-calibration.

In FIG. 4, a first reflected light reflected by the input optical window 182 equipped with the gas cell 180 for wavelength-calibration is guided to the optical detector 160 for measuring the intensity of the reference light. A second reflected light reflected by the output optical window 184 equipped with the gas cell 180 for wavelength-calibration is guided to the optical detector 190 for wavelength-calibration. Since the second reflected light reflected by the output optical window 184 is passed through the gas cell 180 for wavelength-calibration twice, the absorption amount of the light having the absorption line wavelength of the encapsulated gas is doubled and the intensity of the wavelength-calibration signal is doubled. The gas cell 180 for wavelength-calibration, the optical detector 160 for measuring the intensity of reference light, and the optical detector 190 for wavelength-calibration may be integrated to form one module configuration. In this case, any flow cell 140 for measurement target gas may be integrated into the module configuration.

Also in the third embodiment, the input optical window 182 used as a beam splitter is disposed so that the incident angle α of the incident light with respect to the input optical window 182 is less than 10 degrees. The input optical window 182 may be disposed so that the incident angle α is equal to or greater than 3 degrees and equal to or less than 5 degrees. In the third embodiment, the output of the optical source, the gas cell 180 for wavelength-calibration, the flow cell 140 for measurement target gas, and the optical detector 150 for measuring light are disposed on the single optical axis, the miniaturization of the apparatus can be realized.

Although the foregoing has been a description of the several embodiments of the present invention with reference to the drawings, the present invention is not limited to the embodiments, and can be freely modified within the scope of the present invention.

## Claims

1. An optical system for generating at least one beam of reference light comprising:
an optical emitter configured to emit a first beam of light; and
a beam splitter configured to split the first beam into a second beam of measuring light for irradiating a target to be measured and at least one third beam of reference light, the beam splitter being disposed to make an incident angle of the first beam into the beam splitter be less than 10 degrees.

2. The optical system according to Claim 1, wherein the beam splitter is disposed to make the incident angle of the first beam into the beam splitter be equal to or greater than 3 degrees and be equal to or less than 5 degrees.

3. The optical system according to Claim 1 or Claim 2, wherein the optical emitter is an output end of an optical fiber.

4. The optical system according to one of Claims 1 to 3, wherein the beam splitter is a wedge substrate beam splitter.

5. The optical system according to one of Claims 1 to 4, wherein the beam splitter is configured to function as a window of a cell encapsulating the target.

6. The optical system according to Claim 4, wherein the optical system further comprises:
a lens disposed on a first optical axis of the first beam and configured to convert the first beam into a parallel beam; and
a first cell disposed on a second optical axis of the second beam, the target flowing through the first cell, and
the beam splitter is disposed to make an incident angle of the parallel beam into the beam splitter be less than 10 degrees.

7. The optical system according to Claim 6, wherein the at least one third beam comprises a first reference beam and a second reference beam,
the optical system further comprises:
a first optical detector disposed on a third optical axis of the second beam transmitted through the first cell and configured to detect a first intensity of the second beam transmitted through the first cell;
a second optical detector disposed on a fourth optical axis of the first reference beam and configured to detect a second intensity of the first reference beam;
a second cell for wavelength-calibration disposed on an fifth optical axis of the second reference beam; and
a third optical detector disposed on a fifth optical axis of the second reference beam transmitted through the second cell and configured to detect a third intensity of the second reference beam transmitted through the second cell.

8. The optical system according to Claim 7, wherein the first cell comprises an input optical window configured to function as the beam splitter.

9. The optical system according to Claim 6, wherein the optical system further comprises:
a first optical detector disposed on a third optical axis of the second beam transmitted through the first cell and configured to detect a first intensity of the second beam transmitted through the first cell;
a second cell for wavelength-calibration disposed between the lens and the first cell and comprising an input optical window and an output optical window, each of the input optical window and the output optical window being configured to function as the beam splitter, the at least one third beam comprising a first reference beam reflected by the input optical window and a second reference beam reflected by the output optical window,
a second optical detector disposed on a fourth optical axis of the first reference beam and configured to detect a second intensity of the first reference beam; and
a third optical detector disposed on a fifth optical axis of the second reference beam and configured to detect a third intensity of the second reference beam.

10. A method for splitting a beam of light to generate at least one beam of reference light comprising:
inputting a first beam of light into a beam splitter, an incident angle of the first beam into the beam splitter being less than 10 degrees; and
splitting the first beam into a second beam of measuring light for irradiating a target to be measured and at least one third beam of reference light.

11. The method according to Claim 10, wherein the incident angle of the first beam into the beam splitter is equal to or greater than 3 degrees and is equal to or less than 5 degrees.

12. The method according to Claim 10 or Claim 11, wherein inputting the first beam into the beam splitter comprises inputting the first beam into the beam splitter via an optical fiber.

13. The method according to one of Claims 10 to 12, wherein the beam splitter is a wedge substrate beam splitter.

14. The method according to one of Claims 10 to 13, wherein the beam splitter is configured to function as a window of a cell encapsulating the target.
